# EUROPEAN PATENT SPECIFICATION

(11) **EP 0 583 850 B1**
(45) Date of publication and mention of the grant of the patent: **02.04.1997**
(21) Application number: 93202431.8
(22) Date of filing: 18.08.1993
(51) Int. Cl.: A01B 29/04

(54) **A soil cultivating machine**
Bodenbearbeitungsmaschine
Machine pour travailler le sol

(30) Priority: 19.08.1992 NL 9201474
(43) Date of publication of application: 23.02.1994
(73) Proprietor: C. van der Lely N.V., NL-3155 PD Maasland (NL)
(72) Inventor: van der Lely, Cornelis, CH-6300 Zug (CH)
(74) Representative: Mulder, Herman

(56) References cited:
- EP-A- 0 222 451
- EP-A- 0 242 932
- EP-A- 0 292 589
- DE-C- 121 268
- FR-A- 2 369 783
- NL-A- 7 900 478
- US-A- 1 857 753
- PATENT ABSTRACTS OF JAPAN vol. 015, no. 243 (C-0842)21 June 1991 & JP-A-03 076 501 (ISEKI & CO LTD) 2 April 1991
- Prospectus "Köckerling KOMBIMAT Packer-Sä-Kombination PRO*ART 11'89"

## Description

The present invention relates to a soil cultivating machine comprising a frame provided with soil cultivating members and at least one roller having roller elements mounted next to each other by means of spokes on a central carrier, wherein the circumference of a roller member is a tube.

Such a machine is known from the leaflet "Köckerling-Kombimat Packer-Sä-Kombination PRO-ART 11'89". The roller of the known machine functions relatively well and has for an advantage that the worked soil is compressed only within the seed lines, thus favouring the emerging conditions of drilled seeds compared to that of weed-seeds present in the soil between the seed lines. However, the known roller ever, is of heavy construction, which according to the invention is not necessary and sometimes makes combinations of machines impracticable as the centre of gravity of the roller is relatively far behind the tractor. In particular, when the hopper of the drilling machine is filled, this may take a tractor to its limits. In addition, the production of such machines, especially in relatively small batches, is often difficult and expensive, among other things because of equipment specifically required. It is an object of the present invention to achieve a machine which provides at least an improvement in the above respects. To this end, the machine according to the invention comprises a roller with the characterizing features of claim 1.

A further advantageous design feature according to the invention is that a roller member comprises two parts of sheet material (called plate parts hereinafter) abutting each other and, on the circumference, jointly enclosing a space through a profile provided there. In this way, spokes and rings are of one piece, favouring a quick and cheep production of the roller.

According to an other special feature of the invention, the roller comprises roller members shaped like wheels having hollow rims, on the periphery of which there are provided two stamped rings fitting each other. Accordingly, the invention also relates to a soil cultivating machine provided with a frame having soil cultivating members and at least one roller, the roller comprising wheels having hollow rims, on the periphery of which there are provided two stamped rings fitting each other. In this way the roller is conveniently provided with a small flat outer rim, favouring an immediate downward direction of compaction, keeping compaction in the direction between the rows small as possible.

A special design feature according to the invention is that the roller members are mounted and clamped to each other by means of spacers provided in between roller members and located on a central carrier. Accordingly, the invention also relates to a soil cultivating machine having a frame equipped with soil cultivating members and with at least one roller, with the roller comprising hollow wheels mounted and clamped to each other by means of spacers on a central tube.

Furthermore, according to the invention it is advantageous that a roller member having spokes is mounted on a carrier. This results in a weight which is of advantage to the roller. So, the invention also relates to a soil cultivating machine comprising a frame provided with soil cultivating members and at least one roller having roller members mounted next to each other, where a roller member is made of plate parts and is fixed to a carrier by means of spokes.

The invention will now be explained with reference to the accompanying drawings, in which:
Figure 1 shows a top view of a machine in accordance with the present invention and the lifting device of a tractor to which it is coupled;
Figure 2 is a cross-sectional view taken along line II-II of Figure 1;
Figure 3 is a view in the direction of arrow III in Figure 2, and
Figure 4 is a view taken along line IV-IV in Figure 1.

Corresponding parts in the drawings are indicated by the same reference numbers. Moreover, the invention is by no means restricted to the embodiments depicted and described here; they only serve to illustrate the inventive idea.

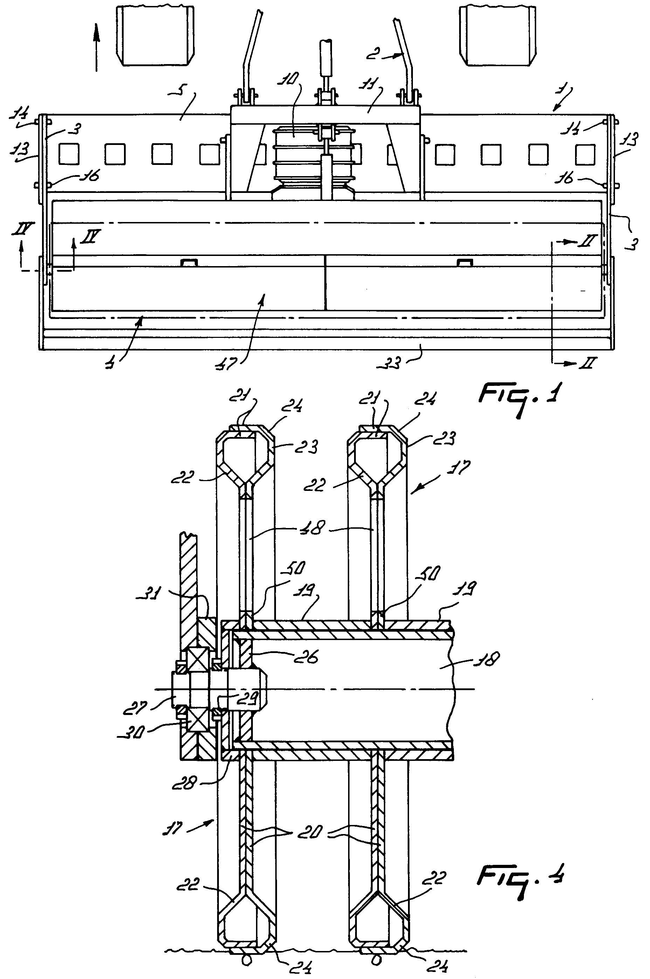

Figure 1 shows a rotary harrow 1 coupled to the lifting device 2 of a tractor. On the rear side, the rotary harrow comprises a roller 4 which is coupled to it through a pair of arms 3. The rotary harrow 3 in itself is a known soil cultivating implement which is mainly used for secondary soil cultivation. In the present embodiment, the 3 m wide rotary harrow 1 comprises a dozen soil cultivating members in driving interconnection with each other through gear wheels 6 housed in a box-like frame 5, which soil cultivating members are rotatable and drivable about shafts pointing in upward direction. The gear wheels are provided on the upper end of the upwards directed shafts which reach through the bottom of the frame 5 and which are bearing-supported therein. One of the two shafts near the centre also reaches through the top side of the box-like frame 5 to one of a pair of bevel gears in a gear box 10 mounted on the frame.

To drive the rotary harrow, the gear box 10 has an outgoing shaft extension which is coupled to the power take-off shaft of the tractor through an intermediate shaft. Moreover, the machine is provided with a trestle 11 mounted in a central position on the top side of the frame 5, which trestle is for coupling with the three-point lifting device 2 of the tractor. On both ends, the box-like frame 5 is closed by a plate 13 extending upwards and projecting above the frame 5, to which the arms 3 are pivotably connected through horizontal shaft extensions 14 mounted on the top side of the frame 5. The level of the frame 5 and, consequently, the soil cultivating depth with respect to the roller 4 is adjustable by means of a lock pin 16 insertable in a plurality of openings provided in the plate 13 on the rear side of the machine. In the present embodiment, the lock pin 16 is applied, in conformity with the principle of "floating", such that the machine is at least partly propped up by the roller 4, but can freely move in upward direction with respect thereto.

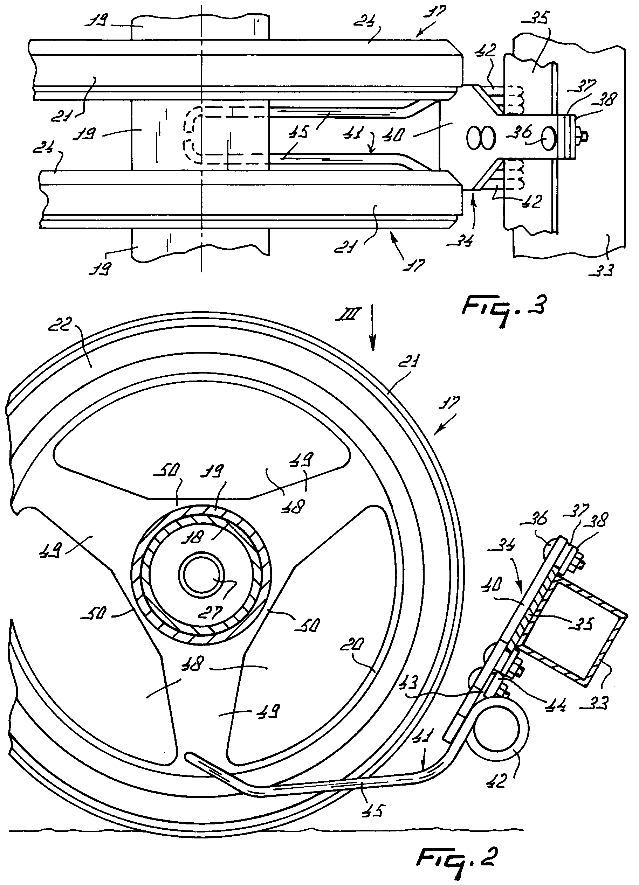

In accordance with the invention, the roller is built up from roller members 17 arranged next to each other on a central carrier 18 in the shape of a tube. In a side view transverse to the direction of motion A, Figure 2 shows such a roller member 17 which is kept at the proper distance from a neighbouring roller member by means of a spacer 19 placed about the carrier 18. As Figure 4 shows, a roller member in the embodiment described is composed of two disks 20 made of sheet material, which are provided with a profile near their circumference. On the outer circumference of the disk, the profile is a ring 21 which determines a part of the cylinder-shaped circumference of the roller 4. From the flat part of the disk 20, the profile is formed by an edge 22 of about 3 cm folded at 45°, which edge then merges into an edge 23 which is folded in a plane being vertical and extending in the direction of travel. The latter profile part merges into the former-mentioned outer ring 21 through an edge of about 1 cm also folded at 45°.

Of any pair of profiled disks of which each of the roller members 17 is built up, one disk's profile edge 23 being in vertical direction and extending in the direction of travel is exactly the sheet-material thickness shorter than the corresponding edge of the other disk. This causes the stamped rings 21 on the periphery of a pair of profiled disks 20 to fit together. Either ring extends in the longitudinal direction of the tube 18 beyond the farmost boundary surface of the plate-shaped part of the disk 20 concerned. Herewith, the centre of the ring 21 being on the outside of a roller member 17 coincides with the abutting faces of the two plate parts 20 of which a roller member 17 has been built up.

Figure 4 also shows the way in which the roller 4 is attached to the arms 3 of the machine and the way in which the roller members 17 are clamped against each other. On either end, the tube 18 of the roller 4 is provided with a welded-on end plate 26 in which, in a hole, a shaft 27 is fixed by welding. This shaft 27 extends laterally and beyond the end of the tube 18. A clamping piece 28 in the shape of a disk provided with a hole, on which disk a ring-shaped part of a spacer is welded, has been slided on the shaft. The ring-shaped part on the clamping piece 28 is partly slided over an end of the tube 18 and fixed by means of a known per se adjusting nut 29. Furthermore, the shaft 27 is supported in relation to an arm 3 by means of a bearing 30. The bearing 30 is fitted in a recess of the arm 3 and is kept in position by a clamping ring 31 which is provided with a corresponding recess and screwed on the arms 3. The bearing 30 is fixed in relation to the shaft 27 by means of a second adjusting nut which keeps the bearing 30 pressed down on a shoulder on the shaft 27.

On the rear side of the roller, the machine is provided with a support 33 in the shape of a square tube which extends in the longitudinal direction of the roller and which is provided with scrapers 34, as Figures 2 and 3 show. The tube 33 is arranged such that the side facing the roller is at an angle of about 30° to a vertical. A plate has been welded on this front side and, seen in a cross-sectional view, this plate has two sides extending beyond the butting surface of the support 33. By this arrangement, the tube 33 is provided with two clamping edges 35 to which a holder 40 for a scraper member 41 is secured by means of a few bolts 36, a spacer 37 belonging to it and a clamping piece 38.

A scraper member 41 has been made of a single piece of spring-steel bar material and is provided with spring coils 42. At the centre of the spring coils 42, a scraper member 41 is provided with a planar loop 43, through which a bolt 36 has been passed, by which bolt the scraper member 41 is secured to the holder 40. In this attachment, a clamping piece 44 provided with a matching recess for the loop 43 is fitted in between the nut belonging to the bolt and the loop 43. All three bolts 36 on a holder 40 are carriage bolts, with the nuts belonging to them being of the same size. From the coils 42, two tines 45 of a scraper member 41 are parallel to the holder 40 for a short distance, namely to beyond the end of the holder 40, after which the tines 45 are bent in a horizontal plane and extend to beyond the centre of the roller 4. In a plan view as shown in Figure 3, the two tines 45 of a scraper member 41 are bent, starting from the holder 40, through an angle of 45° towards each other, after which the tines extend immediately beside the boundary surface, i.e. the edges 23 of a roller member 17. Near their ends, the tines 45 of a scraper member 41 are arranged at an angle of 45° to a horizontal and the head ends are bent for such a distance towards each other that each of the tines has some clearance in the order of the thickness of a tine 45 in the longitudinal direction of the roller 4.

In the present embodiment, the machine is also provided with a sowing drill 47, supported by the roller in a manner not further detailed, of which the delivery tubes discharge at the front side of each roller member. In this arrangement, the roller 4 is being used for packing the sown seed into an advantageous position and for packing the soil in the immediate vicinity thereof. As regards the supply of moisture and the strength of the attachment of the plant which is to grow, this gives rise to advantageous soil conditions which only occur in the seed rows. As a result of the shape of the roller, these conditions are not created between rows, so that the sown seed has a more favourable starting point as compared against that of seeds being unwantedly in the soil between rows. Of course, the roller 4 can also be applied with sowing methods where seed is not deposited in the furrow until the soil has been compacted. The roller, whether provided with wider or narrower spacers 19, can also be advantageously used for artificial settlement of soil cultivated secondarily in general. The effect of the scrapers 34 in the present embodiment is advantageous for a seedbed, because the scraper members 41 are arranged just above the soil in between two roller members, so that the clods scraped off always remain very small. As scraper member 41 is made from spring steel, it is resistant to possible stones which are met with between the members.

In the present embodiment, the plate-shaped part of a roller member 17 is provided with three holes 48. Each of these holes is bounded by an approximately one centimetre wide edge along the tubular profile in a disk 20, the edge(s) of one out of three spokes 49 which have come into existence by the holes 48 and the edge of a disk 20 part 50 bordering on the tube 18. The disk part 50 around the tube 18 also serves as a thrust face for the spacers 19 interposed between roller elements 17. By realizing a roller member with spokes in the way described above, a machine provided with a lightweight, non-expensive, but efficiently operating roller is obtained.

The present invention is by no means limited to what is described hereinbefore, but it also relates to all the details in the drawings. Furthermore, the invention relates to all kinds of alternatives in design, of course, falling within the scope of the claims following below.

## Claims

1. A soil cultivating machine (1) comprising a frame (5) provided with soil cultivating members and at least one roller (4) having ring-like roller members (17) mounted next to each other by means of spokes (49) on a central carrier (18), wherein the circumference of a roller member (17) is a tube, characterized in that said tube and said spokes are made from sheet material.

2. A soil cultivating machine as claimed in claim 1, characterized in that a roller member (17) comprises two plate parts (20) abutting each other, on the periphery of which plate parts (20) there is provided a profile through which they jointly enclose a space.

3. A soil cultivating machine as claimed in claim 1 or 2, characterized in that the roller (4) comprises roller members (17) shaped like wheels provided with hollow rims, on the outer circumference of which rim there are provided two stamped rings (21) fitting each other.

4. A soil cultivating machine as claimed in any one of the preceding claims, characterized in that the roller members (17) are mounted and clamped to each other by means of spacers (19) provided in between roller members (17) on the central carrier (18).

5. A soil cultivating machine as claimed in any one of the preceding claims, characterized in that a roller member (17) provided with spokes (49) is fitted on a carrier (18).

6. A soil cultivating machine as claimed in any one of the preceding claims, characterized in that spoke (49) consists of two abutting plate parts (20).

7. A soil cultivating machine as claimed in any one of the preceding claims, characterized in that the carrier is a tube (18) arranged in a central position.

8. A soil cultivating machine as claimed in any one of the preceding claims, characterized in that the machine comprises a roller (4) having wheels of stamped sheet material (20) the centre distance between said wheels (17) amounting to approximately 12.5 cms.

9. A soil cultivating machine as claimed in any one of the preceding claims, characterized in that the roller (4) is meant for a rotary harrow and is at least partly in support of it.

10. A soil cultivating machine as claimed in any one of the preceding claims, characterized in that the machine comprises resilient scrapers (34) fitted at a distance from the central tube (18).

## Patentansprüche

1. Bodenbearbeitungsmaschine (1) mit einem mit Bodenbearbeitungsgliedern versehenen Rahmen (5) und mindestens einer Walze (4), die ringförmige Walzenelemente (17) aufweist, welche mittels Speichen (49) nebeneinander auf einem zentralen Träger (18) angeordnet sind, wobei der Umfang eines Walzenelementes (17) einen Tubus bildet,
dadurch gekennzeichnet, daß der Tubus und die Speichen aus Flachmaterial hergestellt sind.

2. Bodenbearbeitungsmaschine nach Anspruch 1,
dadurch gekennzeichnet, daß ein Walzenelement (17) zwei aneinander anliegende Flachteile (20) aufweist, die an ihrer Peripherie derart profiliert sind, daß zwischen ihnen ein Raum gebildet ist.

3. Bodenbearbeitungsmaschine nach Anspruch 1 oder 2,
dadurch gekennzeichnet, daß die Walze (4) Walzenelemente (17) aufweist, die als Räder mit hohlen Rändern ausgeführt sind, wobei an dem Außenumfang des Randes zwei gestanzte Ringe (21) vorgesehen sind, die aneinander angepaßt sind.

4. Bodenbearbeitungsmaschine nach einem der vorhergehenden Ansprüche,
dadurch gekennzeichnet, daß die Walzenelemente (17) mittels Distanzhaltern (19) montiert und miteinander verspannt sind, die zwischen Walzenelementen (17) auf dem zentralen Träger (18) angebracht sind.

5. Bodenbearbeitungsmaschine nach einem der vorhergehenden Ansprüche,
dadurch gekennzeichnet, daß ein mit Speichen (49) versehenes Walzenelement (17) auf einem Träger (18) angebracht ist.

6. Bodenbearbeitungsmaschine nach einem der vorhergehenden Ansprüche,
dadurch gekennzeichnet, daß eine Speiche (49) durch zwei aneinander anliegende Flachteile (20) gebildet ist.

7. Bodenbearbeitungsmaschine nach einem der vorhergehenden Ansprüche,
dadurch gekennzeichnet, daß der Träger ein Rohr (18) ist, das in einer zentralen Position angeordnet ist.

8. Bodenbearbeitungsmaschine nach einem der vorhergehenden Ansprüche,
dadurch gekennzeichnet, daß die Maschine eine Walze (4) aufweist, die Räder aus gestanztem Flachmaterial (20) hat, wobei der Achsabstand der Räder (17) etwa 12,5 cm beträgt.

9. Bodenbearbeitungsmaschine nach einem der vorhergehenden Ansprüche,
dadurch gekennzeichnet, daß die Walze (4) für eine Kreiselegge bestimmt ist und zumindest teilweise zu deren Abstützung dient.

10. Bodenbearbeitungsmaschine nach einem der vorhergehenden Ansprüche,
dadurch gekennzeichnet, daß die Maschine elastische Abstreifer (34) aufweist, die in einigem Abstand von dem zentralen Rohr (18) angeordnet sind.

## Revendications

1. Machine pour travailler le sol (1) comprenant un châssis (5) muni d'organes travaillant le sol et d'au moins un rouleau (4) ayant des éléments de rouleau annulaires (17) montés côte à côte au moyen de rayons (49) sur un élément porteur central (18), dans lequel la circonférence d'un élément (17) du rouleau est un tube,
**caractérisée** en ce que ledit tube et lesdits rayons sont faits d'un matériau en feuille.

2. Machine pour travailler le sol selon la revendication 1, caractérisée en ce qu'un élément (17) du rouleau comprend deux parties en forme de plaques (20) contigües l'une à l'autre, sur la périphérie desquelles parties en forme de plaques (20) est prévu un profil par lequel elles renferment conjointement un espace.

3. Machine pour travailler le sol selon la revendication 1 ou 2, caractérisée en ce que le rouleau (4) comprend des éléments de rouleau (17) conformés comme des roues munies de jantes creuses, sur la circonférence extérieure de laquelle jante sont prévus deux anneaux estampés (21) s'ajustant l'un à l'autre.

4. Machine pour travailler le sol selon l'une quelconque des revendications précédentes, caractérisée en ce que les éléments de rouleau (17) sont montés et pincés l'un avec l'autre au moyen d'entretoises (19) prévues entre les éléments du rouleau (17) sur l'élément porteur central (18).

5. Machine pour travailler le sol selon l'une quelconque des revendications précédentes, caractérisée en ce qu'un élément de rouleau (17) muni de rayons (49) est ajusté sur un élément porteur (18).

6. Machine pour travailler le sol selon l'une quelconque des revendications précédentes, caractérisée en ce qu'un rayon (49) consiste en deux parties en forme de plaques (20) contigües l'une à l'autre.

7. Machine pour travailler le sol selon l'une quelconque des revendications précédentes, caractérisée en ce que l'élément porteur est un tube (18) disposé en une position centrale.

8. Machine pour travailler le sol selon l'une quelconque des revendications précédentes, caractérisée en ce que la machine comprend un rouleau (4) ayant des roues (20) en matériau en feuille estampé, la distance de centre à centre entre lesdites roues (17) se montant à environ 12,5 cm.

9. Machine pour travailler le sol selon l'une quelconque des revendications précédentes, caractérisée en ce que le rouleau (4) est conçu pour une herse rotative et est au moins partiellement en support de celle-ci.

10. Machine pour travailler le sol selon l'une quelconque des revendications précédentes, caractérisée en ce que la machine comprend des racleurs (34) élastiques montés à une certaine distance du tube central (18).
